# EUROPÄISCHE PATENTSCHRIFT

(11) **EP 1 799 775 B1**
(45) Veröffentlichungstag und Bekanntmachung des Hinweises auf die Patenterteilung: **14.05.2008**
(21) Anmeldenummer: 06721896.6
(22) Anmeldetag: 04.04.2006
(51) Int. Cl.: C09D 5/08

(54) **ROSTSCHUTZMITTEL UND VERFAHREN ZU DESSEN HERSTELLUNG**
ANTICORROSIVE AGENT AND METHOD FOR THE PRODUCTION THEREOF
AGENT ANTIROUILLE ET PROCEDE DE PRODUCTION CORRESPONDANT

(30) Priorität: 05.04.2005 CH 619052005
(43) Veröffentlichungstag der Anmeldung: 27.06.2007
(73) Patentinhaber: SFS Handels Holding AG, CH-9435 Heerbrugg (CH)
(72) Erfinder: JENAL, Louis, CH-9443 Widnau (CH)
(74) Vertreter: Hasler, Erich
(86) Internationale Anmeldenummer: PCT/CH2006/000190
(87) Internationale Veröffentlichungsnummer: WO 2006/105683

(56) Entgegenhaltungen:
- CH-A- 580 152
- DE-A1- 2 425 213
- GB-A- 1 450 916
- GB-A- 1 494 212

## Beschreibung

### Gebiet der Erfindung

Die Erfindung betrifft ein Rostschutzmittel sowie ein Verfahren zu dessen Herstellung gemäss Oberbegriff der Ansprüche 1, 23, und 26.

Ganz allgemein bezieht sich die vorliegende Erfindung auf wässrige Rostschutzmittel, welche imstande sind, den Rost, d.h. Eisenoxid/Eisenhydroxid, in stabile Verbindungen umzuwandeln und gleichzeitig eine stabile Schutzschicht zu erzeugen, um ein Weiterrosten zu verhindern.

### Stand der Technik

In den vergangenen Jahrzehnten sind verschiedenartige Rostschutz- bzw. Rostumwandlungsmittel bekannt geworden. Eine Gruppe dieser Rostschutzmittel enthält plastische Harze bzw. Bindemittel und Chelatbildner, wie beispielsweise Tannine.

Die deutsche Offenlegungsschrift DE-OS-24 25 213 offenbart ein Rostumwandlungs- und -schutzmittel bestehend aus einer Dispersion bzw. Emulsion von Kunststoffen und/ oder Lösungen aus Kunstharzen, sowie aus aromatischen Oxycarbonsäuren mit Phenolcharakter und/oder aromatischen Sulfosäuren bzw. Aldehydvorkondensaten solcher Sulfosäuren besteht. Das beschriebene Rostschutzmittel wird während der Herstellung auf einen pH-Wert zwischen 2.5 und 4.5 eingestellt. Eine der Komponenten ist eine Kunstgummidispersion, z.B. aus Styrol-Butadienkautschuk oder Styrol-Butadien-Acrylnitrilkautschuk und/oder Lösungen aus Kunstharzen, wie z.B. Lösungen aus Polyvinylacetat-Copolymeren oder Lösungen aus Phenoplasten, wasserlöslichen Alkydharzen oder wasserverdünnbaren Epoxiharzen. Als weitere Komponente des Rostschutzmittels kommen in Betracht natürliche Gallussäure, Tannin, aromatische Oxycarbonsäuren mit Phenolcharakter, insbesondere Dioxy- und Trioxycarbonsäuren und Naphthensäuren. Ausserdem eignen sich aromatische Sulfosäuren sowie Aldehyd-Vorkondensate derselben.

Als Säuren können im Rostschutzmittel der DE-OS-24 25 213 zur Einstellung eines pH's zwischen 2.5 und 4.5 Ameisensäure, Milchsäure oder p-Toluolsulfonsäure enthalten sein.

Das Rostschutzmittel kann ausserdem Lösungsmittel, wie z.B. Xylol, Butanol, Isopropylalkohol, Weichmacher oder auch Fettsäuren, Fettsäureamide, Füllstoffe wie Silikate sowie Pigmente wie Titanoxyd enthalten.

Das beschriebene Rostschutzmittel eignet sich als Grundiermittel für Eisenbleche und kann zu diesem Zweck als Füllstoffe Kieselsäurepulver enthalten. Ausserdem kann das Rostschutzmittel modifizierte, wasserlösliche Alkydharze (Oelalkyde) als Bindemittel enthalten.

Die EP-B-0 207 934 (deren Inhalt hiermit unter Bezugnahme aufgenommen wird) offenbart ein Rostumwandlungs- und -schutzmittel, welches filmbildende Harze bzw. Bindemittel, Chelatbildner und saure Aktivatoren in Emulsionsform enthalten. Als Bindemittel werden Styrol-Butadien Latex in Verbindung mit einer Lösung eines Copolymers auf der Basis von Vinyltoluol-Acrylsäureester in White Spirit eingesetzt. Ausserdem sind im Rostschutzmittel 1 bis 5 Gewichtsprozente hochdisperses Siliziumdioxid (mittels Flammverfahren hergestelltes amorphes Kieselpulver) zusammen mit bis zu 1% an anionischem Heteropolysaccharid (Verdickungsmittel) enthalten. Das Rostschutzmittel verwendet ausserdem noch Quarz mit einer Teilchengrösse um 100 µm. Holzöl ist mit einem Gehalt zwischen 6 und 10 Gewichtsprozenten vertreten. Der Wassergehalt beträgt weniger als 45 Gewichtsprozente.

Weitere Bestandteile der Zusammensetzung können sein:
10 bis 30 Gewichtsprozente Harze bzw. Bindemittel,
0.5 bis 6 Gewichtsprozente Chelatbildner (Tannine und/oder Gallussäure), und flüchtige organische Säuren.

Die Herstellung des Rostschutzmittels erfolgt, indem eine ölig-organische und eine wässerige Phase gebildet werden und während des Emulgierens das hochdisperse Silizium beigegeben wird.

Nachteilig an der beschriebenen Rostschutzzusammensetzung ist die Verwendung von White Spirit als Lösungsmittel. White Spirit enthält bis zu 25 Gew. % aromatische Verbindungen, deren Verwendung aufgrund ihrer krebserregenden Eigenschaften zunehmend eingeschränkt wird. Allerdings ist die Verwendung von White Spirit als Lösungsmittel für die Effektivität der beschriebenen Rostschutzzusammensetzung von wesentlicher Bedeutung, denn mittels White Spirit kann eine relativ grosse Menge des Bindemittels in Lösung gehalten werden. Ein einfacher Ersatz von White Spirit durch ein anderes Lösungsmittel ist deshalb nicht so einfach möglich. Außerdem würde der Ersatz des Lösungsmittels durch ein anderes auch Auswirkungen auf die Lagerbeständigkeit, Thixotropie etc. haben und diese u.U. stark herabsetzen.

Die DE-A-24 25 213 offenbart ein Rostumwandlungs- und -schutzmittel enthaltend eine Styrol-Butadienkautschuk Dispersion, wasserlösliche Alkydharze, Di- und Trioxycarbonsäuren, Säure und Füllmittel. Der pH der Lösung liegt zwischen 2.5 und 4.5. Als Füllstoffe werden Silikate, Talk (= Magnesiumsilikat) oder Kieselsäurepulver eingesetzt Den in der Beschreibung angegebenen Ausführungsbeispielen ist gemeinsam, dass diese jeweils zwischen 45 und 50 Gewichts-% einer Styrol-Butadienkautschuk Dispersion, Vinyltoluol-Butadienharzdispersion, copolymeren Polyvinylacetatemulsion oder Styrolacrylatharzdispersion enthalten. Ausserdem verwenden bestimmte Ausführungsbeispiele als Füllstoff Silikate in Gestalt von Talkum oder Kieselsäurepulver (Aluminiumsilikat). Eine genauere Spezifizierung der eingesetzten Füllmittel findet sich in der Beschreibung nicht. Der gewichtsmässige Anteil an Talkum oder Kieselsäurepulver beträgt jeweils 5 Gewichtsprozente.

Ein Rostschutzmittel mit einer ganz ähnlichen Zusammensetzung offenbart die CH 580 152. Auch diese Zusammensetzung enthält 50 Gewichtsprozente an Bindemitteln, sowie Trioxycarbonsäuren, organische Lösungsmittel, Wasser und gegebenfalls Füllstoffe und Pigmente. Sowohl das Rostschutzmittel der DE-A-24 25 213 als auch dasjenige der CH 580 152 verwenden als Lösungsmittel u.a. Xylol, was in der heutigen Zeit unerwünscht ist. Bezüglich des eingesetzten Kieselsäurepulvers finden sich keine weiteren Angaben.

Eine besondere Bedeutung kommt der Thixotropie eines Rostschutzmittels zu, d.h. das Mittel wird beim Aufrühren (=Scherbeanspruchung) dünner und kehrt beim Stehenlassen in den Ausgangs-Viskositätsbereich zurück. Oder bei einem thixotrop eingestellten Lack erniedrigt sich die Viskosität beim Auftragen mit Pinsel, Rolle oder im Spritzverfahren (= Scherbeanspruchung), um anschließend wieder in den Ursprungszustand zurückzukehren, wodurch Ablaufen und Tropfenbildung auch bei größerer Schichtstärke vermieden werden bzw. es können dickere Schichten aufgetragen werden. Zur Einstellung der optimalen rheologischen Eigenschaften enthält das Rostschutzmittel der EP-B-0 207 934 ein Heteropolysaccharid. Dieses hat die Funktion eines Verdickungsmittels. In der Praxis hat sich allerdings gezeigt, dass das Heteropolysaccharid zum Verklumpen neigt, sodass die Anwendbarkeit und Effektivität des Mittels nach längerem Lagern leidet Ausserdem beeinflussen die Polysaccharide die Filmeigenschaften negativ. Als eine Schwierigkeit hat sich auch herausgestellt, genügend Bindemittel in Lösung zu halten.

Wichtig für die inhibierende Wirkung des Rostschutzmittels ist ferner die Penetrationsfähigkeit des Rostschutzmittels. Damit das Rosten wirksam gestoppt werden kann, ist von Bedeutung, dass die Chelatbildner die poröse Rostschicht durchdringen und den Rost (Eisenoxid/Eisenhydroxid) in stabile Verbindungen umwandeln.

Es hat sich in der Vergangenheit bewährt, die Rostschutzmittel resp. Rostumwandlungsmittel in Form von Emulsionen bereitzustellen. Allerdings zeichnen sich solche Emulsionen oft durch eine geringe Lagerbeständigkeit aus. Oft verklumpen solche Rostschutzmittel bereits nach wenigen Wochen, sodass diese unbrauchbar sind.

Im Auftrag der Anmelderin untersuchten M. Favre et al. (Influence of Gallic Acid on the Phase Transformation in Iron Oxide Layer below organic Coatings studied with Moessbauer Spectroscopy in Corrosion Science, Vol. 40, No. 4/5, pp. 793 - 803,1998) die Wirkung von Gallussäure auf Korrosionsreaktionen unter Farbanstrichen auf Stahl während Tauchexperimenten in An- und Abwesenheit von Sauerstoff mittels Mössbauer Spektroskopie. Es zeigte sich, dass Gallussäure in Anwesenheit von Sauerstoff die anfängliche Auflösung von Eisen durch Komplexierung verstärkt Der Eisenkomplex wird anschliessend in eine unlösliche Verbindung oxidiert, was das anodische Reduktionspotential reduziert. Unter diesen Bedingungen wird kein Magnetit gebildet. In der Abwesenheit von Sauerstoff bildet sich Magnetit durch Reduktion von Lepidokrokit auf korrodiertem Stahl, welcher mit gallusfreien Filmen beschichtet war. In der Anwesenheit von Gallussäure im Film wird die reduktive Umwandlung von Lepidokrokit zu Magnetit hingegen verhindert. Es konnte also nachgewiesen, dass Gallussäure (stellvertretend für andere Tannine) imstande ist, Rost in eine nicht-reaktive Schutzschicht umzuwandeln.

Von Bedeutung bei der Bereitstellung eines Rostschutzmittels ist heutzutage, dass die gängigen Vorschriften (Umwelt-, Arbeits- und Hygienebedingungen) eingehalten werden können. In diesem Zusammenhang ist auch die Norm DIN EN ISO 12944 T4 zu beachten. Die erwähnte Norm regelt, wie rostige Oberflächen vorbereitet werden müssen. Neu können gemäss DIN EN ISO 12944 T4 die Oberflächen mittels Wasser, Feucht- oder Nassstrahlen gereinigt und vorbereitet werden. Dies bedeutet, dass die Rostschutztechnik nach solchen Produkten verlangt, welche auch auf noch feuchte Oberflächen appliziert werden können.

### Aufgabenstellung

Ziel ist es, ein verbessertes Rostschutzmittel bereitzustellen, welches sich durch eine hohe Lagerbeständigkeit auszeichnet Außerdem ist es ein Ziel, ein Rostschutzmittel bereitzustellen, welches beim Kontakt mit Rostschichten besonders stabile Schichten erzeugt und sowohl eine gute Haftung zwischen neutralisierter Rostschicht und Untergrund gewährleistet als auch ein guter Haftgrund für weitere Deckschichten bildet. Noch ein Ziel ist es, ein lagerbeständiges Gemisch zu finden, welches auf Polysaccharide verzichten kann. Ein weiteres Ziel ist es, das eingangs erwähnte Rostschutzmittel dahingehend zu verbessern, dass auf aromatische Lösungsmittel verzichtet werden kann. Noch ein Ziel ist es, ein Rostschutzmittel mit verbesserter Langzeitwirkung zur Verfügung zu stellen. Ziel ist es auch, ein Rostschutzmittel bereitzustellen, welches die Anforderungen der DIN Norm Nr.12944 vollumfänglich erfüllt und auch auf feuchten Oberflächen (nicht schwitzend) appliziert werden kann. Ein weiteres Ziel ist, ein möglichst umweltverträgliches Rostschutzmittel bereitzustellen, welches keine Schwermetalle wie Co, Mn, Ti oder Pb enthält.

### Beschreibung

Erfindungsgemäß enthält ein Rostschutz- und Rostumwandlungsmittel gemäss Oberbegriff von Anspruch 1 als Füllstoff plättchenförmiges Bariumsulfat oder Siliziumdioxid (SiO₂). Überraschenderweise kann durch den Einsatz eines Füllstoffes in Plättchenform die Qualität der Schutzschicht wesentlich verbessert werden. Außerdem ist zur Überraschung des Erfinders die Lagerbeständigkeit des erfindungsgemässen Rostschutzmittels trotz Abwesenheit von Polysacchariden wesentlich erhöht. Währenddem es beim konventionellen Rostschutzmittel der eingangs erwähnten EP-A-0 207 934 mit einem Anteil an Polysacchariden bereits nach 6 Monaten Lagerung zu Verdickungen/Verklumpungen gekommen ist, die sich auch nach 1 bis 1½ Jahren nicht mehr optimal einrühren lassen (Viskositätsanstieg), ist die Lagerbeständigkeit der neuen Mischung stark verbessert und kann mehrere Jahre betragen. Es hat sich zudem gezeigt, dass Talkum als Füllstoff ungeeignet ist, weil die Lagerfähigkeit unzureichend ist Vorzugsweise ist das Rostschutzmittel im Wesentlichen aromatenfrei. Ebenso sind im Rostschutzmittel zweckmässigerweise keine Schwermetalle wie Titanoxid, Zink, Zinkchromat, Zinkphosphat, Blei, oder dergleichen verwendet. Das erfindungsgemässe Rostschutz- und -umwandlungsmittel hat den grossen Vorteil, dass die mit Wasser arbeitenden, umweltfreundlichen Oberflächenreinigungs- und -vorbereitungsverfahren gemäss der DIN EN ISO 12944 T4 eingesetzt werden können (Feucht-, Nass- und Druckwasser-Strahlen), da das Mittel auch auf feuchte Oberflächen appliziert werden kann (keine chemischen Rückstände (Korrosionsstimulatoren); bedeutend weniger Staubentwicklung beim Feucht-, Nass- und Druckwasserstrahlen, keine Gefahr von Funkenbildung).

Es hat sich ausserdem gezeigt, dass die Wirkstoffe des neuartigen Rostschutzmittels mit dem Rost penetrieren und mit den instabilen Formen zu einem organischen Komplex reagieren. Dies bringt den Vorteil mit sich, dass eine einfache mechanische Vorbereitung genügt, bei welcher die Walzhaut, die Rostschicht (lose, nicht haftend) und/oder lose Beschichtungen lediglich mittels Bürsten von Hand oder maschinell entfernt werden müssen. Auch bildet das Rostschutzmittel mit dem widerstandsfähigen Bindemittel-System eine inhibierende Schutzschicht aus, welche ein Weiterrosten wirksam verhindern kann. Insgesamt können die Gesamtsanierungskosten (Material und Arbeit) geringer als mit herkömmlichen Rostschutzmitteln sein, weil rationellere Oberflächenvorbereitungsmethoden basierend auf DIN EN ISO 12944 T4 eingesetzt werden können. Vorzugsweise werden für das Rostschutzmittel SiO₂ - Plättchen verwendet.

Vorteilhaft liegt das plättchenförmige Bariumsulfat oder Siliziumdioxid in einer Reinheit von > 98.5 %, vorzugsweise > 99 % vor. Es hat sich in praktischen Versuchen gezeigt, dass die besten Resultate erst dann erreicht werden, wenn das plättchenförmige Bariumsulfat oder Siliziumdioxid in hoher Reinheit eingesetzt ist. Zweckmässigerweise hat das plättchenförmige Bariumsulfat oder Siliziumdioxid eine durchschnittlich Plättchengrösse zwischen 1 und 8 µm (=Mikrometer), vorzugsweise zwischen 2 und 6 Mikrometern (µm), und ganz besonders bevorzugt zwischen 3 und 5 µm. Mit derartigen Plättchen können kompakte Schutzschichten gebildet werden, welche feuchtigkeitsundurchlässig sind. Dadurch wird ein Weiterrosten wirksam verhindert.

Vorzugsweise ist als Bindemittel ein Butyl-Styrol-Copolymer, Styrol-Acrylat, Vinylacrylester Copolymer, Vinyltoluol-Acrylsäureester oder ein Gemisch von 2 oder mehreren der vorgenannten Polymere eingesetzt. Diese dem Fachmann bekannten Lackbindemittel verleihen dem flüssigen Rostschutzmittel eine hohe Beständigkeit.

Gemäss einer bevorzugten Ausführungsform wird als Bindemittel ein Gemisch von Butyl-Styrol-Copolymeren und Styrol-Acrylat eingesetzt. Dieses Gemisch hat sich in der Praxis besonders bewährt. Es ergibt einen elastischen, gut haftenden und dauerhaften Film. Dieser Film kann Grundlage (Grundierung) für einen Deckanstrich sein.

Vorzugsweise liegt der gewichtsmässige Anteil des ersten und zweiten Bindemittels gesamthaft bei weniger als 55 Gewichtsprozenten,vorzugsweise bei weniger als 45 Gewichtsprozenten und ganz besonders bevorzugt bei weniger als 40 Gewichtsprozenten. Vorteilhaft sind 6 bis 25 Gew.-prozente, vorzugsweise 6 bis 20 Gew.-prozente des ersten Bindemittels, und 6 bis 30 Gewichstprozente, vorzugsweise 8 bis 24 Gewichtsprozente des zweiten Bindemittels vorgesehen. Zweckmässigerweise ist als zweites Bindemittel ein wasserverdünnbares Styrol-Butadien Polymer eingesetzt. Dieses erlaubt, das Rostschutzmittel als stabile mischdisperse Emulsion herzustellen, wenn das in einem organischen Lösungsmittel suspendierte erste Bindemittel mit dem in wässriger Phase aufgenommenen zweiten Bindemittel gemischt wird.

Als trocknende Öle und/oder ölmodifizierte Harze können im Rostschutzmittel Alkydharze, Leinöl, Holzöl, Leinöl-Holzöl-Standöl-Gemisch, Standöl, Lackleinöl, Safloröl, Teak Oil, Danish Oil oder ähnliche pflanzliche Öle, synthetische Polyesterharze mit einem Ölanteil zwischen 40 und 70% eingesetzt sein.

Vorteilhaft ist im Rostschutzmittel als organisches Lösemittel ein erstes im Wesentlichen aromatenfreies aliphatisches Lösemittel resp. Lösemittelgemisch eingesetzt. Die Verwendung eines aromatenfreien aliphatischen Lösemittels hat den Vorteil, dass das Rostschutzmittel bezüglich gesundheitlicher Gefährdung unbedenklich ist und für Anwendungen im Lebensmittelsektor und für Privatanwender (Selbermacher) über Grossverteiler, Baumärkte vertrieben werden kann. Besonders bevorzugt ist das organische Lösemittel ein Paraffingemisch. Zweckmässigerweise hat das erste Lösemittel einen Siedepunkt von > 150 °C, vorzugsweise > 170 °C, und ganz besonders bevorzugt einen solchen zwischen ungefähr 170 °C und ungefähr 200 °C. Paraffinartige Lösemittel mit einem Siedepunkt im beanspruchten Temperaturbereich haben sich überraschenderweise als geeignet zum Lösen des Bindemittels herausgestellt, obwohl deren Lösungsvermögen a priori als schlechter als von aromentenhaltigen Lösemittel anzusehen ist.

Vorzugsweise enthält das Rostschutzmittel ein zweites, niedrigsiedendes organisches Lösemittel in Gestalt einer Alkoholverbindung mit 1 bis 6 Kohlenstoffatomen. Als verwendbare niedrig siedende Alkohole kommen entweder Methanol, Ethanol, n- oder i-Propanol oder n-, iso- oder tert.-Butylalkohol in Frage. Vorzugsweise wird jedoch iso-Propanol eingesetzt, weil iso-Propanol nach dem Auftragen des Rostschutzmittels rasch verdunstet und somit zu einer schnellen Filmbildung führt und andererseits zu einer Verbesserung der Penetration der Chelatbildner in die Restrostschicht sorgt.

Vorteilhaft ist als ein zweites Bindemittel eine wässerige Polymer Emulsion eingesetzt. Es hat sich gezeigt, dass mit der Verwendung eines zweiten wasserverdünnbaren Bindemittels besonders lagerfähige Rostschutzzusammensetzungen mit hervorragenden thixotropen Eigenschaften hergestellt werden können. Zweckmäßigerweise ist zur Bildung einer stabilen mischdispersen Emulsion ein wasserverdünnbares Styrol-Butadien eingesetzt. Das Styrol-Butadien Polymer in Emulsionsform hat den Vorteil, dass es Tannine, Di- und Trihydroxysäuren, z.B. Gallussäure u.ä. Verbindungen, in wässriger Lösung halten kann und überraschenderweise auch als Verdickungsmittel wirkt. Damit kann trotz Verzicht auf Polysaccharide eine Verbesserung der Langzeitstabilität bei guten thixotropen Eigenschaften des Rostschutzmittels erreicht werden. Vorteilhaft liegt das zweite Bindemittel mit einem Gehalt zwischen 6 und 24 Gewichstprozenten, vorzugsweise zwischen 8 und 20 Gewichtsprozenten vor. Dies bedeutet, dass das Rostschutzmittel einen maximalen Gehalt von 44 Gewichtsprozenten Bindemittel aufweist und damit mit weniger Bindemittel auskommt als die eingangs erwähnten Rostschutzmittel.

Vorzugsweise ist als organische Säure entweder Ameisensäure, Zitronensäure, Milchsäure, Oxalsäure oder ein Gemisch von 2 oder mehreren der vorgenannten Säuren eingesetzt. Diese organischen Säuren eignen sich besonders gut als Aktivatoren und zur Einstellung eines sauren pH-Werts von zwischen 2.5 und 4, vorzugsweise zwischen 3 und 3.5. Besonders bevorzugt ist als organische Säure Ameisensäure eingesetzt. Diese Säure hat den Vorteil, dass sie leicht verdunsten kann und somit keine sauren Verbindungen auf der Metalloberfläche zurückbleiben.

Zweckmässigerweise liegt der Chelatbildneranteil relativ zum Festkörperanteil zwischen 0.5 Gew.-proz. und 10 Gew.-proz., vorzugsweise zwischen 1 Gew.-proz. und 10 Gew.-proz.

Vorteilhaft liegt die Pigmentvolumenkonzentration (PVK) zwischen ungefähr 10% und 50%, vorzugsweise zwischen ungefähr 15% und 35%. Durch Einhalten des beanspruchten Verhältnisses von Bindemittel und Füllstoff können langzeitstabile Emulsionen mit hervorragenden thixotropen Eigenschaften erhalten werden.

In der erfindungsgemäßen Zusammensetzung können zudem folgende Zusatzstoffe oder Hilfsmittel eingesetzt sein: Antischaummittel, Netzmittel, Filmbildungsmittel, Verlaufmittel etc.

Gegenstand der vorliegenden Erfindung ist weiter ein Verfahren zur Herstellung eines Rostschutzmittels durch folgende Verfahrensschritte:
a) Lösen (Suspendieren) mindestens eines ersten Bindemittels in Gestalt von Polymeren oder Copolymeren in einem im Wesentlichen aromatenfreien organischen Lösungsmittel und anschliessendes Mischen mit 0.5 bis 10 Gew.-proz. eines trocknenden Öls und/ oder ölmodifizierten Harzes zur Herstellung eines ersten Gemisches;
b) Dispergieren von 0.5 bis 5 Gew.-proz. Chelatbildner wie Gallussäuren, Tannine, aromatische Oxycarbonsäuren, insbesondere Dioxy- und Trioxycarbonsäuren, und Naphthensäuren in einer wässerigen Suspension enthaltend ein wasserlösliches resp. wasserverdünnbares Polymer oder Copolymer, vorzugsweise ein Styrol-Butadien Polymer, und gleichzeitige oder anschliessende Zugabe einer organischen Säure zur Herstellung eines zweiten Gemisches, und
c) Mischen des ersten Gemisches mit dem zweiten Gemisch, weiter gekennzeichnet dadurch,
dass der resultierenden Mischung ein inerter, filmverstärkender, plättchen- oder schuppenförmiger Füllstoff in Gestalt von Bariumsulfat oder Siliziumdioxid unter vorsichtigem Dispergieren zugegeben wird.

Gemäss einem anderen unabhängigen Aspekt der vorliegenden Erfindung ist ein Rostschutzmittel gemäss Oberbegriff von Anspruch 23 dadurch gekennzeichnet, dass als organisches Lösemittel ein erstes im Wesentlichen aromatenfreies aliphatisches Lösemittel resp. Lösemittelgemisch eingesetzt ist Durch die Verwendung eines aromatenfreien aliphatischen Lösemittels ist das Rostschutzmittel bezüglich gesundheitlicher Gefährdung unbedenklich und für Anwendungen im Lebensmittelsektor geeignet. Ausserdem kann es für Privatanwender (Selbermacher) über Grossverteiler, Baumärkte vertrieben werden. Als organisches Lösungsmittel ist vorzugsweise ein Isoparaffingemisch eingesetzt. Weitere vorteilhafte Merkmale des Rostschutzmittels sind in den Unteransprüchen definiert.

Nachfolgend werden Ausführungsbeispiele von Zusammensetzungen des erfindungsgemässen Rostschutzmittels beschrieben. Dabei soll im Rahmen der vorliegenden Erfindung nachfolgend unter dem Begriff "Rostschutzmittel" ein Rostumwandlungs- und Rostschutzmittel verstanden werden, welches einerseits in der Lage ist, Rostschichten zu penetrieren und in stabile Schichten zu verwandeln und andererseits eine stabile Deck- und Schutzschicht zu erzeugen, welche ein weiteres Rosten verhindert. Unter "Glimmer" soll im Rahmen der vorliegenden Erfindung ausschliesslich die "Plättchenform" des eingesetzten Füllmittels bezeichnet werden. "Hochdisperses Kieselsäurepulver" hat Partikelgrössen im Submikronbereicht (ca. 0.01 µm und darunter).

Unter Pigmentvolumenkonzentration (PVK) wird der Quotient aus "Volumen Füllstoff und Pigmente" x 100 durch "Volumen Füllstoff und Pigmente und Volumen Bindemittel" verstanden. Die Gesamtmenge "Bindemittel" ergibt sich in den nachfolgenden Ausführungsbeispielen durch Addition von Holzöl, Latex und AcrylatPolymer. Als "Füllstoffe" gelten Tannin, Gallussäure, Kieselsäure und plättchenförmiges SiO₂.

### 1. Ausführungsbeispiel:

| Komponenten | Gew.% |
|---|---|
| Isopar G | 12 |
| Emulgator (nichtionogen) | 0.1 |
| Vinyltoluolacrylat Polymer | 12 |
| Antischaummittel | 0.5 |
| Holzöl | 6.0 |
| Isopropanol | 5.0 |
| Gallussäure | 1.5 |
| Ameisensäure | 0.4 |
| Styrol-Butadien Polymer | 8.0 |
| Hochreines, plättchenförmiges SiO₂ (Glimmer) | 20.0 |
| Additive und Zusatzstoffe | 0.5 |
| Wasser | 34.0 |
| Gesamt | 100.0 |

### 2. Ausführungsbeispiel:

| Komponente | Gew.% |
|---|---|
| Isopar G | 17 |
| Emulgator (nichtionogen) | 0.2 |
| Vinyltoluolacrylat Styrolacrylat Polymer | 15 |
| Antischaummittel | 0.8 |
| Holzöl | 8.0 |
| Isopropanol | 6.0 |
| hochdisperses Kieselsäurepulver | 0.4 |
| Tannine | 2.2 |
| Ameisensäure | 0.5 |
| Styrol-Butadien Polymer | 10.0 |
| Hochreines SiO₂ (in Plättchenform) | 8.0 |
| Additive und Zusatzstoffe | 0.5 |
| Wasser | 31.4 |
| Gesamt | 100.0 |

### 3. Ausführungsbeispiel:

| Komponenten | Gew.% |
|---|---|
| Isopar G | 20 |
| Emulgator (nichtionogen) | 0.5 |
| Vinyltoluolacrylat Styrolacrylat Polymer | 20 |
| Antischaummittel | 1.0 |
| Holzöl | 10.0 |
| Isopropanol | 6.5 |
| Hochdisperses Kieselsäurepulver | 1.5 |
| Tannine | 5.0 |
| Ameisensäure | 0.8 |
| Styrol-Butadien Polymer | 14.0 |
| Hochreines SiO₂ (in Plättchenform) | 5.0 |
| Additive und Zusatzstoffe | 0.5 |
| Wasser | 15.2 |
| Gesamt | 100.0 |

Die Ausführungsbeispiele 1 bis 3 haben die nachfolgenden ungefähren Pigmentvolumenkonzentrationen:

| | | |
|---|---|---|
| 1. | Ausführungsbeispiel: | PVK ∼ 24.8 |
| 2. | Ausführungsbeispiel: | PVK ∼12.8 |
| 3. | Ausführungsbeispiel: | PVK ∼ 11.4 |

Die Pigmentvolumenkonzentration liegt also in der Praxis vorteilhaft zwischen 10 und 40, vorzugsweise zwischen 10 und 30 und besonders bevorzugt zwischen 12 und 25.

Das Rostschutzmittel wird hergestellt, indem zuerst 3 verschiedene Vorprodukte hergestellt werden. Diese sind:

| Lösung A | Gew.-% |
|---|---|
| Isopar G | 17.5 |
| Vinylacrylat-Polymer (100%) | 8 - 20 |
| Antischaummittel | 1.1 |
| Holzöl | 5-10 |

Die vorerwähnten Komponenten werden unter Rühren oder Schütteln gemischt und das Vinylacrylat-Polymer gelöst.

| Mischung B (Emulsion) | Gew.-% |
|---|---|
| Isopropanol | 3 - 8 |
| Kieselsäure (hochdisperses Kieselsäurepulver) | 0. 5 |
| Propylenglykol | 1.1 |
| Gerbstoffe | 5-10 |
| Ameisensäure | 0.4 |
| Styrol-Butadien Polymer | 8 - 20 |
| Wasser | Rest |

Die erwähnten Komponenten werden gemischt und das Styrol-Butadien Polymer im Wasser suspendiert.

| Mischung C | Gew.-% |
|---|---|
| Antischaummittel | 0.2 |
| Plättchenförmiges SiO₂ oder BaSO₄ | 2 - 20% |
| Methylpyrrolidon | 0.5 |

Das Methylpyrrolidon hat die Funktion, das Kriechverhalten und die Penetration des Rostschutzmittels zu verbessern.

Zuerst wird die Lösung A (ölig - organische Phase) und die Mischung B (wässrige Phase) hergestellt. , indem die einzelnen Bestandteile gemischt und durch heftiges Rühren gelöst resp. emulgiert werden. Durch Mischen der beiden Vorprodukte A und B entsteht sodann unter Rühren (hohe Rührgeschwindigkeit!) eine sog. mischdisperse Emulsion. In diese wird danach bei reduzierter Rührgeschwindigkeit das plättchenförmige SiO₂ (oder BaSO₄) eingerührt. Dabei ist darauf zu achten, dass die plättchenförmige Struktur des Füllmittels beim Dispergieren nicht zerstört wird.

Isopar G ist ein Gemisch von Isoparaffin-Kohlenwasserstoffen und erhältlich von der Firma Exxon Mobil Chemical. Ein wässeriges Styrol-Butadien Polymer ist beispielsweise von der deutschen Chemiefirma Hoechst erhältlich. Bei der Wahl des Styrol-Butadien Polymers ist darauf zu achten, dass dieses mit den Chelatbildner verträglich ist.

Als plättchenförmiges SiO₂ kann Nocaculite eingesetzt werden. Novaculite, ein pulverförmiges, natürlich vorkommendes Mineral in Plättchenform, ist unter verschiedenen Bezeichnungen, beispielsweise NOVACITE®, im Handel erhältlich. Novaculite ist eine hochreine Mikroform von Quarz mit plättchenförmigen Partikeln. Novaculite - Vorkommen gibt es in Arkansas, USA. Vorzugsweise wird ein Novaculite mit einer durchschnittlichen Plättchengrösse von < 10 Mikrometern (µm), vorzugsweise < 8 µm, und ganz besonders bevorzugt < 6 µm eingesetzt. Das eingesetzte plättchenförmige, hochreine Siliziumdioxid besitzt vorzugsweise weniger als 1 Gewichtsprozent Verunreinigungen. Die Hauptverunreinigungen liegen vorzugsweise in Form verschiedener Oxide, wie beispielsweise Al₂O₃, Fe₂O₃, TiO₂, CaO, MgO etc., vor (chemisch inert).

Die vorliegende Erfindung betrifft ein aromaten- und talkumfreies Rostschutzmittel in Emulsions- resp. Dispersionsform enthaltend ein erstes, in einem organischen Lösungsmittel lösbares Bindemittel, ein zweites, in wässeriger Phase lös- resp. suspendierbaren Bindemittel, trocknende Öle und/oder ölmodifizierte Harze, Chelatbildner wie Dioxy- und Trioxycarbonsäuren etc., vorzugsweise einen Emulgator, Wasser, ein aromatenfreies organisches Lösemittel für die Aufnahme des ersten Bindemittels, sowie eine organische Säure. Weiter enthält das Rostschutzmittel erfindungsgemäss einen inerten, filmverstärkenden, plättchen- oder schuppenförmigen Füllstoff in Gestalt von SiO₂ oder BaSO₄.

Vergleich zwischen dem Rostschutzmittel gemäss EP-B-0 207 934 und dem erfindungsgemässen Rostschutzmittel:

| | Rostschutzmittel gemäss EP-B-0207934 | Rostschutzmittel gemäss Erfindung |
|---|---|---|
| Langzeitstabilität der Emulsion | 1 ½ Jahre | > 3 Jahre |
| Rheologische Applikationseigenschaften bei 60 µm Schichtdicke | | |
| a) Stehvermögen an senkrechten Flächen | mittel | gut |
| b) Verlauf der Emulsion | mittel | gut |

## Patentansprüche

1. Rostschutzmittel in Emulsions- und/oder Dispersionsform enthaltend:
ein erstes in organischer Phase lösliches (suspendierbares) Bindemittel und vorzugsweise ein zweites, in wässriger Phase lösliches (suspendierbares) Bindemittel, beide in Gestalt von Polymeren oder Copolymeren,
0.5 bis 10 Gew.-proz. trocknende Öle und/oder ölmodifizierte Harze,
0.5 bis 5 Gew.-proz. Chelatbildner wie beispielsweise Gallussäuren, Tannine, aromatische Oxycarbonsäuren, insbesondere Dioxy- und Trioxycarbonsäuren, Naphthensäuren, oder Derivate oder Gemische der vorgenannten Verbindungen mindestens einen Emulgator
wenigstens 10 Gew.-proz. Wasser
mindestens 10 Gew.-proz. wenigstens eines ersten organischen Lösemittels, sowie mindestens eine vorzugsweise organische Säure zur Einstellung eines sauren pH-Wertes, und
mindestens einem Füllstoff;
weiter **dadurch gekennzeichnet, dass**
als Füllstoff plättchenförmiges Bariumsulfat oder Siliziumdioxid (SiO₂) eingesetzt ist.

2. Rostschutzmittel nach Anspruch 1, **dadurch gekennzeichnet, dass** das plättchenförmige Bariumsulfat oder Siliziumdioxid in einer Reinheit von > 98.5 %, vorzugsweise > 99 % vorliegt.

3. Rostschutzmittel nach einem der Ansprüche 1 bis 3, **dadurch gekennzeichnet, dass** das plättchenförmige Bariumsulfat oder Siliziumdioxid eine durchschnittlich Plättchengrösse zwischen 1 und 8 my (=Mikrometer), vorzugsweise zwischen 2 und 6 my, und ganz besonders bevorzugt zwischen 3 und 5 my hat.

4. Rostschutzmittel nach einem der Ansprüche 1 bis 4, **dadurch gekennzeichnet, dass** der plättchenförmige Füllstoff mit einem Gehalt zwischen 1 und 20 Gew.-proz. und, vorzugsweise zwischen 4 und 20 Gew.-proz. vorkommt.

5. Rostschutzmittel nach einem der Ansprüche 1 bis 4, **dadurch gekennzeichnet, dass** zwischen 6 und 18 Gew.proz. des plättchenförmigen Füllstoffes eingesetzt sind.

6. Rostschutzmittel nach einem der Ansprüche 1 bis 5, **dadurch gekennzeichnet, dass** 6 bis 25 Gew.-prozente, vorzugsweise 6 bis 20 Gew.-prozente des ersten Bindemittels, und
6 bis 30 Gewichstprozente, vorzugsweise 8 bis 24 Gewichtsprozente des zweiten Bindemittels vorgesehen sind.

7. Rostschutzmittel nach einem der Ansprüche 1 bis 6, **dadurch gekennzeichnet, dass** als erstes Bindemittel Butyl-Styrol-Copolymere, Styrol-Acrylat Copolymere, Vinylacrylester Copolymer, Vinyltoluol-Acrylsäureester oder ein Gemisch von 2 oder mehreren der vorgenannten Polymere eingesetzt ist.

8. Rostschutzmittel nach einem der Ansprüche 1 bis 7, **dadurch gekennzeichnet, dass** das Rostschutzmittel als erstes Bindemittel ein Gemisch von Butyl-Styrol-Copolymeren und Styrol-Acrylat enthält.

9. Rostschutzmittel nach einem der Ansprüche 1 bis 8, **dadurch gekennzeichnet, dass** als zweites Bindemittel ein wasserverdünnbares Styrol-Butadien Polymer eingesetzt ist.

10. Rostschutzmittel nach einem der Ansprüche 1 bis 9, **dadurch gekennzeichnet, dass** als trocknende Öle und/oder ölmodifizierte Harze Alkydharze, Leinöl, Holzöl, Halböl, Leinöl-Holzöl-Standöl-Gemisch, Standöl, Lackleinöl, Safloröl, Teak Oil, Danish Oil, oder ähnliche pflanzliche Öle, synthetische Polyesterharze mit einem Ölanteil zwischen 40 und 70% eingesetzt sind.

11. Rostschutzmittel nach einem der Ansprüche 1 bis 10, **dadurch gekennzeichnet, dass** als organisches Lösemittel ein erstes im Wesentlichen aromatenfreies aliphatisches Lösemittel resp. Lösemittelgemisch eingesetzt ist.

12. Rostschutzmittel nach einem der Ansprüche 1 bis 11, **dadurch gekennzeichnet, dass** das organische Lösemittel ein Paraffingemisch ist.

13. Rostschutzmittel nach einem der Ansprüche 1 bis 12, **dadurch gekennzeichnet, dass** das organische Lösemittel ein Isoparaffingemisch ist.

14. Rostschutzmittel nach einem der Ansprüche 1 bis 13, **dadurch gekennzeichnet, dass** das erste Lösemittel einen Siedepunkt von > 150 °C, vorzugsweise > 170 °C, und ganz besonders bevorzugt einen solchen zwischen ungefähr 170 °C und ungefähr 200 °C hat.

15. Rostschutzmittel nach einem der Ansprüche 1 bis 14, **dadurch gekennzeichnet, dass** ein zweites, niedrigsiedendes organisches Lösemittel in Gestalt einer Alkoholverbindung mit 1 bis 6 Kohlenstoffatomen eingesetzt ist.

16. Rostschutzmittel nach Anspruch 15, **dadurch gekennzeichnet, dass** der niedrigsiedende Alkohol entweder Methanol, Ethanol, n- oder i-Propanol oder n-, iso- oder tert.-Butylalkohol, vorzugsweise jedoch iso-Propanol, ist.

17. Rostschutzmittel nach einem der Ansprüche 1 bis 16, **dadurch gekennzeichnet, dass** als organische Säure entweder Ameisensäure, Zitronensäure, Milchsäure, Oxalsäure, Toluolsulfonsäure oder ein Gemisch von 2 oder mehreren der vorgenannten Säuren eingesetzt ist.

18. Rostschutzmittel nach einem der Ansprüche 1 bis 17, **dadurch gekennzeichnet, dass** als organische Säure Ameisensäure eingesetzt ist.

19. Rostschutzmittel nach einem der Ansprüche 1 bis 18, **dadurch gekennzeichnet, dass** das Verhältnis zwischen Chelatbildner und Emulgator zwischen 2 : 6 und 3 : 5 liegt.

20. Rostschutzmittel nach einem der Ansprüche 1 bis 19, **dadurch gekennzeichnet, dass** die Pigmentvolumenkonzentration (PVK) zwischen ungefähr 10 und 50, vorzugsweise zwischen 15 und 35 liegt.

21. Rostschutzmittel nach einem der Ansprüche 1 bis 20, **dadurch gekennzeichnet, dass** weiter ein Antischaummittel enthalten ist

22. Rostschutzmittel nach einem der Ansprüche 1 bis 21, **dadurch gekennzeichnet, dass** ein Anteil von maximal 3 Gewichtsprozenten, vorzugsweise maximal 2 Gewichtsprozenten hochdisperses Kieselsäurepulver enthalten ist.

23. Rostschutzmittel in Emulsions- und/oder Dispersionsform enthaltend:
mindestens ein erstes Bindemittel in Gestalt von Polymeren oder Copolymeren,
0.5 bis 10 Gew.-proz. trocknende Öle und/oder ölmodifizierte Harze,
0.5 bis 5 Gew.-proz. Chelatbildner wie beispielsweise Gallussäuren, Tannine, aromatische Oxycarbonsäuren, insbesondere Dioxy- und Trioxycarbonsäuren, Naphthensäuren, oder Derivate oder Gemische der vorgenannten Verbindungen mindestens einen Emulgator
wenigstens 10 Gew.-proz. Wasser
mindestens 10 Gew.-proz. wenigstens eines ersten organischen Lösemittels, sowie mindestens eine vorzugsweise organische Säure zur Einstellung eines sauren pH-Wertes, und
mindestens einem Füllstoff;
**weiter dadurch gekennzeichnet, dass**
als organisches Lösemittel ein erstes im Wesentlichen aromatenfreies aliphatisches Lösemittel resp. Lösemittelgemisch eingesetzt ist.

24. Rostschutzmittel nach Anspruch 23, **dadurch gekennzeichnet, dass** das organische Lösemittel ein Paraffingemisch, vorzugsweise ein Isoparaffingemisch ist.

25. Rostschutzmittel nach Anspruch 23 oder 24, weiter **gekennzeichnet durch** ein Merkmal gemäss einem der Ansprüche 1 bis 7 oder 11 bis 21.

26. Verfahren zur Herstellung eines Rostschutzmittels durch folgende Verfahrensschritte:
a) Lösen von 6 bis 20 Gew.-proz. mindestens eines ersten Bindemittels in Gestalt von Polymeren oder Copolymeren in einem im Wesentlichen aromatenfreien organischen Lösungsmittel und anschliessendes Mischen mit 0.5 bis 10 Gew.-proz. eines trocknenden Öls und/ oder ölmodifizierten Harzes zur Herstellung eines ersten Gemisches;
b) Dispergieren von 0.5 bis 5 Gew.-proz. Chelatbildner wie Gallussäuren, Tannine, aromatische Oxycarbonsäuren, insbesondere Dioxy- und Trioxycarbonsäuren, und Naphthensäuren in einer wässerigen Suspension enthaltend ein wasserlösliches resp. wasserverdünnbares Polymer oder Copolymer, vorzugsweise ein Styrol-Butadien Polymer, und gleichzeitige oder anschliessende Zugabe einer organischen Säure zur Herstellung eines zweiten Gemisches, und
c) Mischen des ersten Gemisches mit dem zweiten Gemisch,
weiter **dadurch gekennzeichnet,**
**dass** der resultierenden Mischung als Füllstoff plättchenförmiges Bariumsulfat oder Siliziumdioxid (SiO₂) zugegeben und dispergiert wird.

## Claims

1. A rust-proofing agent in the form of an emulsion and/or a dispersion containing: a first binder soluble (suspendable) in the organic phase and preferably a second binder soluble (suspendable) in the aqueous phase, both in the form of polymers or copolymers,
0.5 to 10 wt.% drying oils and/or oil-modified resins,
0.5 to 5 wt.% chelating agents such as for example gallic acids, tannins, aromatic oxycarboxylic acids, in particular dioxy- and trioxycarboxylic acids, naphthenic acids, or derivatives or mixtures of the above-stated compounds, at least one emulsifier,
at least 10 wt.% water,
at least 10 wt.% of at least a first organic solvent, and at least one preferably organic acid for establishing an acidic pH value, and
at least one filler;
further **characterised in that**
barium sulfate or silicon dioxide (SiO₂) in flake form is used as the filler.

2. A rust-proofing agent according to claim 1, **characterised in that** the barium sulfate or silicon dioxide in flake form is present in a purity of > 98.5%, preferably > 99%.

3. A rust-proofing agent according to any one of claims 1 to 3, **characterised in that** the barium sulfate or silicon dioxide in flake form has an average flake size of between 1 and 8 µm (micrometres), preferably between 2 and 6 µm, and very particularly preferably between 3 and 5 µm.

4. A rust-proofing agent according to any one of claims 1 to 4, **characterised in that** the filler in flake form is present in a content of between 1 and 20 wt.% and, preferably between 4 and 20 wt.%.

5. A rust-proofing agent according to any one of claims 1 to 4, **characterised in that** between 6 and 18 wt.% of the filler in flake form is used.

6. A rust-proofing agent according to any one of claims 1 to 5, **characterised in that** 6 to 25 wt.%, preferably 6 to 20 wt.% of the first binder, and
6 to 30 wt.-%, preferably 8 to 24 wt.% of the second binder are provided.

7. A rust-proofing agent according to any one of claims 1 to 6, **characterised in that** butyl/styrene copolymers, styrene/acrylate copolymers, acrylic vinyl ester copolymer, vinyltoluene/acrylic acid esters or a mixture of 2 or more of the above-stated polymers is/are used as the first binder.

8. A rust-proofing agent according to any one of claims 1 to 7, **characterised in that** the rust-proofing agent contains a mixture of butyl/styrene copolymers and styrene/acrylate as the first binder.

9. A rust-proofing agent according to any one of claims 1 to 8, **characterised in that** a water-dilutable styrene/butadiene polymer is used as the second binder.

10. A rust-proofing agent according to any one of claims 1 to 9, **characterised in that** alkyd resins, linseed oil, wood oil, half oil, linseed oil/wood oil/stand oil mixture, stand oil, refined linseed oil, safflower oil, teak oil, Danish oil, or similar vegetable oils, synthetic polyester resins with an oil content of between 40 and 70% are used as the drying oils and/or oil-modified resins.

11. A rust-proofing agent according to any one of claims 1 to 10, **characterised in that** a first aliphatic solvent or solvent mixture which is substantially free from aromatic hydrocarbons is used as the organic solvent.

12. A rust-proofing agent according to any one of claims 1 to 11, **characterised in that** the organic solvent is a paraffin mixture.

13. A rust-proofing agent according to any one of claims 1 to 12, **characterised in that** the organic solvent is an isoparaffin mixture.

14. A rust-proofing agent according to any one of claims 1 to 13, **characterised in that** the first solvent has a boiling point of > 150°C, preferably > 170°C, and very particularly preferably one between roughly 170°C and roughly 200°C.

15. A rust-proofing agent according to any one of claims 1 to 14, **characterised in that** a second, low-boiling organic solvent in the form of an alcohol compound with 1 to 6 carbon atoms is used.

16. A rust-proofing agent according to claim 15, **characterised in that** the low-boiling alcohol is one of methanol, ethanol, n- or i-propanol or n-, iso- or tert-butyl alcohol, but preferably iso-propanol.

17. A rust-proofing agent according to any one of claims 1 to 16, **characterised in that** one of formic acid, citric acid, lactic acid, oxalic acid, toluenesulfonic acid or a mixture of 2 or more of the above-stated acids is used as the organic acid.

18. A rust-proofing agent according to any one of claims 1 to 17, **characterised in that** formic acid is used as the organic acid.

19. A rust-proofing agent according to any one of claims 1 to 18, **characterised in that** the ratio between chelating agent and emulsifier is between 2:6 and 3:5.

20. A rust-proofing agent according to any one of claims 1 to 19, **characterised in that** the pigment volume concentration (PVC) is between roughly 10 and 50, preferably between 15 and 35.

21. A rust-proofing agent according to any one of claims 1 to 20, **characterised in that** an antifoaming agent is additionally present.

22. A rust-proofing agent according to any one of claims 1 to 21, **characterised in that** a proportion of at most 3 wt.%, preferably at most 2 wt.%, of highly disperse pulverulent silica is present.

23. A rust-proofing agent in the form of an emulsion and/or a dispersion containing: at least a first binder in the form of polymers or copolymers, 0.5 to 10 wt.% drying oils and/or oil-modified resins,
0.5 to 5 wt.% chelating agents such as for example gallic acids, tannins, aromatic oxycarboxylic acids, in particular dioxy- and trioxycarboxylic acids, naphthenic acids, or derivatives or mixtures of the above-stated compounds, at least one emulsifier,
at least 10 wt.% water,
at least 10 wt.% of at least a first organic solvent, and at least one preferably organic acid for establishing an acidic pH value, and
at least one filler;
further **characterised in that**
a first aliphatic solvent or solvent mixture substantially free from aromatic hydrocarbons is used as the organic solvent.

24. A rust-proofing agent according to claim 23, **characterised in that** the organic solvent is a paraffin mixture, preferably an isoparaffin mixture.

25. A rust-proofing agent according to claim 23 or claim 24, further
**characterised by** a feature according to any one of claims 1 to 7 or 11 to 21.

26. A method of producing a rust-proofing agent by the following method steps:
a) dissolving 6 to 20 wt.% of at least a first binder in the form of polymers or copolymers in an organic solvent substantially free from aromatic hydrocarbons and subsequent mixing with 0.5 to 10 wt.% of a drying oil and/or oil-modified resin to produce a first mixture;
b) dispersing 0.5 to 5 wt.% chelating agents such as gallic acids, tannins, aromatic oxycarboxylic acids, in particular dioxy- and trioxycarboxylic acids, and naphthenic acids in an aqueous suspension containing a water-soluble or water-dilutable polymer or copolymer, preferably a styrene/butadiene polymer, and simultaneously or subsequently adding an organic acid to produce a second mixture, and
c) mixing the first mixture with the second mixture,
further **characterised in that**,
barium sulfate or silicon dioxide (SiO₂) in flake form is added to the resultant mixture as filler and dispersed.

## Revendications

1. Produit antirouille sous forme d'émulsion et/ou de dispersion contenant :
- un premier liant (pouvant être mis en suspension) soluble en phase organique et, de préférence, un deuxième liant (pouvant être mis en suspension) soluble en phase aqueuse, les deux sous forme de polymères ou copolymères,
- 0,5 à 10 % en poids d'huiles siccatives et/ou de résines modifiées par des huiles,
- 0,5 à 5 % en poids d'agents chélateurs comme, par exemple, des acides galliques, des tanins, des acides oxycarboxyliques aromatiques, en particulier des acides dioxy et trioxycarboxyliques, des acides naphténiques, ou bien des dérivés ou des mélanges des composés indiqués ci-dessus,
- au moins un émulsifiant,
- au moins 10 % en poids d'eau,
- au moins 10 % en poids d'au moins un premier solvant organique ainsi qu'au moins un acide de préférence organique pour régler un pH acide et
- au moins une charge ;
**caractérisé en ce que**
comme charge, on utilise, du sulfate de baryum ou du dioxyde de silicium en forme de plaquettes (SiO₂).

2. Produit antirouille selon la revendication 1,
**caractérisé en ce que**
le sulfate de baryum ou le dioxyde de silicium en forme de plaquettes est pur à plus de 98,5 %, de préférence à plus de 99 %.

3. Produit antirouille selon l'une quelconque des revendications 1 à 3,
**caractérisé en ce que**
la taille moyenne des plaquettes du sulfate de baryum ou du dioxyde de silicium en forme de plaquettes est comprise entre 1 et 8 µm, de préférence entre 2 et 6 µm et de manière tout particulièrement préférée entre 3 et 5 µm.

4. Produit antirouille selon l'une quelconque des revendications 1 à 4,
**caractérisé en ce que**
la teneur en charge en forme de plaquettes est comprise entre 1 et 20 % en poids et, de préférence, entre 4 et 20 % en poids.

5. Produit antirouille selon l'une quelconque des revendications 1 à 4,
**caractérisé en ce qu'**
on utilise entre 6 et 18 % en poids de charge en forme de plaquettes.

6. Produit antirouille selon l'une quelconque des revendications 1 à 5,
**caractérisé en ce qu'**
on prévoit 6 à 25 % en poids, de préférence 6 à 20 % en poids du premier liant, et
6 à 30 % en poids, de préférence 8 à 24 % en poids du deuxième liant.

7. Produit antirouille selon l'une quelconque des revendications 1 à 6,
**caractérisé en ce que**
comme premier liant, on utilise, des copolymères de butyle-styrène, des copolymères de styrène-acrylate, un copolymère d'ester acrylique de vinyle, les esters d'acide acryliques de vinyltoluène ou un mélange de 2 des polymères cités ci-dessus ou plus.

8. Produit antirouille selon l'une quelconque des revendications 1 à 7,
**caractérisé en ce que**
comme premier liant, il contient, un mélange de copolymères de butyle-styrène et de styrène-acrylate.

9. Produit antirouille selon l'une quelconque des revendications 1 à 8,
**caractérisé en ce que**
comme deuxième liant on utilise un polymère diluable dans l'eau de styrène et de butadiène.

10. Produit antirouille selon l'une quelconque des revendications 1 à 9,
**caractérisé en ce que**
comme huiles siccatives et/ou comme résines modifiées par des huiles, on utilise, des résines à base d'alkyde, de l'huile de lin, de l'huile de bois, de la demi-huile, un mélange d'huile de lin, d'huile de bois, de standolie, de standolie, d'huile de lin raffinée, d'huile de carthame, d'huile de teck, d'huile de Danemark ou des huiles végétales similaires, des résines de polyester synthétiques avec une fraction d'huile comprise entre 40 et 70 %.

11. Produit antirouille selon l'une quelconque des revendications 1 à 10,
**caractérisé en ce que**
comme solvant organique, on utilise, un premier solvant aliphatique ou un mélange de solvants aliphatiques essentiellement sans aromatique.

12. Produit antirouille selon l'une quelconque des revendications 1 à 11,
**caractérisé en ce que**
le solvant organique est un mélange de paraffines.

13. Produit antirouille selon l'une quelconque des revendications 1 à 12,
**caractérisé en ce que**
le solvant organique est un mélange d'isoparaffines.

14. Produit antirouille selon l'une quelconque des revendications 1 à 13,
**caractérisé en ce que**
le premier solvant a un point d'ébullition > 150°C, de préférence > 170°C, et d'une manière tout particulièrement préférée un point d'ébullition compris entre environ 170°C et environ 200°C.

15. Produit antirouille selon l'une quelconque des revendications 1 à 14,
**caractérisé en ce qu'**
on utilise un deuxième solvant organique à bas poids moléculaire sous forme de composé alcoolique comportant de 1 à 6 atomes de carbone.

16. Produit antirouille selon la revendication 15,
**caractérisé en ce que**
l'alcool à plus bas point d'ébullition est du méthanol, de l'éthanol, du n ou du i-propanol ou de l'alcool n, iso ou tert-butylique, de préférence cependant de l'isopropanol.

17. Produit antirouille selon l'une quelconque des revendications 1 à 16,
**caractérisé en ce que**
comme acide organique, on utilise, soit de l'acide formique, de l'acide citrique, de l'acide lactique, de l'acide oxalique, de l'acide toluène sulfonique, soit un mélange de 2 ou plusieurs des acides précités.

18. Produit antirouille selon l'une quelconque des revendications 1 à 17,
**caractérisé en ce qu'**
on utilise de l'acide formique comme acide organique.

19. Produit antirouille selon l'une quelconque des revendications 1 à 18,
**caractérisé en ce que**
le rapport entre l'agent chélateur et l'émulsifiant est compris entre 2:6 et 3:5.

20. Produit antirouille selon l'une quelconque des revendications 1 à 19,
**caractérisé en ce que**
la concentration volumique de pigment (PVK) est comprise entre environ 10 et 50, de préférence entre 15 et 35.

21. Produit antirouille selon l'une quelconque des revendications 1 à 20,
**caractérisé en ce qu'**
il contient en outre un agent antimousse.

22. Produit antirouille selon l'une quelconque des revendications 1 à 21,
**caractérisé en ce qu'**
il contient une fraction d'au maximum 3 % en poids, de préférence d'au maximum 2 % en poids d'une poudre d'acide silicique hautement dispersée.

23. Produit antirouille sous forme d'émulsion et/ou de dispersion contenant :
au moins un premier liant sous forme de polymères ou copolymères,
0,5 à 10 % en poids d'huiles siccatives et/ou de résines modifiées par des huiles,
0,5 à 5 % en poids d'agents chélateurs comme, par exemple, des acides galliques, des tanins, des acides oxycarboxyliques aromatiques, en particulier des acides dioxy et trioxycarboxyliques, des acides naphténiques, ou bien des dérivés ou des mélanges des composés indiqués ci-dessus,
au moins un émulsifiant,
au moins 10 % en poids d'eau,
au moins 10 % en poids d'au moins un premier solvant organique ainsi qu'au moins un acide de préférence organique pour régler un pH acide et
au moins une charge ;
**caractérisé en ce que**
comme solvant organique on utilise un premier solvant aliphatique essentiellement sans aromatiques respectivement un mélange de solvants aliphatiques sans aromatiques.

24. Produit antirouille selon la revendication 23,
**caractérisé en ce que**
le solvant organique est un mélange de paraffines, de préférence un mélange d'isoparaffines.

25. Produit antirouille selon la revendication 23 ou la revendication 24,
**caractérisé par**
une caractéristique selon l'une quelconque des revendications 1 à 7 ou 11 à 21.

26. Procédé de fabrication d'un produit antirouille grâce aux étapes suivantes :
a) dissolution de 6 à 20 % en poids d'au moins un premier liant en forme de polymères ou de copolymères dans un solvant organique essentiellement sans aromatiques, puis mélange avec 0,5 à 10 % en poids d'une huile siccative et/ou d'une résine modifiée par des huiles pour confectionner un premier mélange ;
b) dispersion de 0,5 à 5 % en poids d'agents chélateurs comme les acides galliques, les tannins, les acides oxycarboxyliques aromatiques, en particulier les acides dioxy et trioxycarboxyliques, et les acides naphténiques dans une suspension aqueuse contenant un polymère ou un copolymère soluble respectivement diluable dans l'eau, de préférence un polymère styrène-butadiène, et en même temps ou ensuite addition d'un acide organique pour confectionner un deuxième mélange, et
c) mélange du premier mélange au deuxième,
**caractérisé en ce qu'**
on ajoute au mélange qui en résulte du sulfate de baryum ou du dioxyde de silicium (SiO₂) en forme de plaquettes et on disperse.
